# EUROPÄISCHE PATENTSCHRIFT

(11) **EP 2 233 422 B1**
(45) Veröffentlichungstag und Bekanntmachung des Hinweises auf die Patenterteilung: **04.05.2011**
(21) Anmeldenummer: 09004316.7
(22) Anmeldetag: 26.03.2009
(51) Int. Cl.: B65H 75/40, H02G 11/02

(54) **Tragbare Schlauch- oder Kabeltrommel**
Portable hose or cable drum
Dévidoire portatif de tuyau ou câble

(43) Veröffentlichungstag der Anmeldung: 29.09.2010
(73) Patentinhaber: Hugo Brennenstuhl GmbH & Co. KG, 72074 Tübingen (DE)
(72) Erfinder: Brennenstuhl, Hugo, 72074 Tübingen (DE)
(74) Vertreter: Vogler, Bernd

(56) Entgegenhaltungen:
- WO-A-2006/038755
- GB-A- 840 530
- US-A1- 2003 085 316

## Beschreibung

Die Erfindung betrifft eine tragbare Schlauch- oder Kabeltrommel, mit einem an einem Standgestell um eine Trommelachse drehbar gelagerten Trommelkörper, der aus einer den Schlauch oder das Kabel aufnehmenden Wickelwelle und die Wickelwelle zu beiden Enden abschließende Trommeldeckel mit gegenüber der Wickelwelle deutlich größerem Durchmesser aufgebaut ist, wobei das Standgestell einen in Standlage der Trommel unterhalb der Trommeldeckel angeordneten Fußabschnitt aufweist, auf dem die Trommel standsicher auf den Untergrund abstellbar ist, der über einen Verbindungsabschnitt mit einem oberhalb der Trommeldeckel im Wesentlichen parallel zur Trommelachse verlaufenden Handgriffabschnitt verbunden ist.

Aus der DE 10 2005 042 155 B3 ist eine tragbare Schlauch- oder Kabeltrommel der eingangs erwähnten Art bekannt, deren Standgestell einen Fuß aufweist, über den die Kabeltrommel standsicher auf den Untergrund abgestellt werden kann. An den Fuß schließt sich, einstückig mit diesem verbunden, ein Vertikalabschnitt an, der oberhalb der Trommeldeckel in einen sich im Wesentlichen parallel zur Trommelachse erstreckenden Horizontalabschnitt, auf den dann ein Handgriff aufgesteckt werden kann, übergeht. Der Vertikalabschnitt verläuft seitlich neben einem der Trommeldeckel. Da sich der Trommelkörper derartiger Trommeln nicht vollständig innerhalb des von dem Standgestell umspannten Raumes befindet, besteht die Gefahr, dass bei einem Aufprall der Kabeltrommel, z.B. beim Herunterfallen, der aus Kunststoff gebildete Trommelkörper beschädigt wird.

Aus der DE 198 08 820 C1 ist eine Kabeltrommel bekannt, bei der sich das Standgestell käfigartig um den Trommelkörper herumspannt. Dabei sind zwei sich parallel zur Trommelachse erstreckende Fußholme vorgesehen, an denen sich jeweils ein seitlich neben dem vorderen Trommeldeckel erstreckender Vertikalholm angeschlossen ist. Die Vertikalholme gehen dann oberhalb des Trommeldeckels jeweils in einen horizontalen Holm über, wobei die Horizontalhome wiederum über einen senkrecht zur Trommelachse verlaufenden Handgriffholm miteinander verbunden sind. Ein derartiges Standgestell ist relativ aufwändig herzustellen und auch sehr sperrig. Außerdem ist der Tragekomfort einer solchen Trommel relativ beschränkt, da sich der Handgriffabschnitt senkrecht zur Trommelachse erstreckt, wodurch die Trommel dann beim Tragen seitlich wegkippt.

Aus der WO 2006/038755 A1 ist eine Kabeltrommel mit den Merkmalen des Oberbegriffs des Anspruchs 1 bekannt.

Aufgabe der Erfindung ist es, eine tragbare Schlauch- oder Kabeltrommel der eingangs erwähnten Art zu schaffen, die einen Schutz für den Trommelkörper gegen Beschädigung bietet, sich durch eine unsperrige Bauweise auszeichnet sowie einen hohen Tragekomfort bietet.

Diese Aufgabe wird durch eine tragbare Schlauch- oder Kabeltrommel mit den Merkmalen des unabhängigen Anspruchs 1 gelöst. Weiterbildungen der Erfindung sind in den Unteransprüchen dargestellt.

Bei der erfindungsgemäße tragbare Schlauch- oder Kabeltrommel ist der Verbindungsabschnitt von zwei jeweils einem der Trommeldeckel zugeordneten Verbindungsholmen gebildet, die sich jeweils vom Fußabschnitt ausgehend nach oben in Richtung Trommelachse erstrecken und in den Handgriffabschnitt münden, wobei die beiden Verbindungsholme gemeinsam einen vor den Außenumfang der Trommeldeckel ragenden Schutzbügel bilden, der in Seitenansicht der Trommel gesehen der Außenkontur der Trommeldeckel vorgelagert ist.

Durch die Ausbildung des den Trommeldeckeln vorgelagerten Schutzbügels werden Schläge oder Stöße, die in Radialrichtung auf den Trommelkörper einwirken, beispielsweise durch herabstürzende oder umfallende Bauteile oder auch durch das Umwerfen der Trommel nach vorne, zuverlässig abgefangen. Im Vergleich zur vorerwähnten DE 198 08 820 C1 ist das Standgestell der erfindungsgemäßen Schlauch- oder Kabeltrommel weit weniger sperrig, da hier keine weit seitlich neben den Trommeldeckeln angeordnete Gestellabschnitte vorgesehen sind. Insbesondere bleibt der vordere Trommeldeckel, an den sich eine Steckdosenanordnung mit wenigstens einer Steckdose befindet frei und leicht zugänglich, so dass das Ein- bzw. Ausstecken weiterführender Stromkabel schnell und einfach durchführbar ist. Schließlich besteht auch ein hoher Tragekomfort, da sich der Handgriffabschnitt im Wesentlichen parallel zur Trommelachse erstreckt. Bei entsprechender Gestaltung und Anordnung der Verbindungshalme wird die Möglichkeit einer Seitenführung des Schlauchs oder Kabels durch die einander zugewandten Innenflächen der Verbindungsholme geschaffen. Das Standgestell der Schlauch- oder Kabeltrommel besitzt ferner eine ästhetische Form.

Bei einer Weiterbildung der Erfindung sind die Verbindungsholme im Wesentlichen parallel zueinander ausgerichtet.

Ein seitlicher Kippschutz sowohl in die eine als auch in die andere Richtung kann dadurch erreicht werden, falls die Verbindungsholme in Axialrichtung bezüglich der Trommelachse über die Außenflächen der Trommeldeckel hinausstehen. Die Verbindungsholme können also einen seitlichen Überstand über die Außenseiten der Trommeldeckel haben. Fällt die Schlauch- oder Kabeltrommel also auf die Seite, so wird sie durch die seitlich vorstehenden Verbindungsholme abgefangen, so dass der Trommelkörper nicht beschädigt wird.

In besonders bevorzugter Weise entspricht die lichte Weite zwischen den beiden Verbindungsholmen im Wesentlichen der Breite eines durch einander gegenüberliegende Innenseiten der Trommeldeckel gebildeten Wickelraums. Dabei wird eine zuverlässige Seitenführung des Kabels oder des Schlauchs beim Aufwickeln geschaffen, so dass das Kabel bzw. der Schlauch nicht über die Außenseiten der beiden Trommeldeckel gelangen kann, was zu einem unregelmäßigen und erschwerten Aufwickeln führen würde. Ferner wird verhindert, dass sich das Kabel oder der Schlauch zwischen Gestell und Trommeldeckel einklemmt. Es wird ein Kabeleinklemmschutz geschaffen.

In besonders bevorzugter Weise besitzen die Verbindungsholme jeweils einen zwischen Fußabschnitt und Handgriffabschnitt konvex gekrümmten Krümmungsabschnitt. Prinzipiell wäre es jedoch auch möglich, dass die Verbindungsholme zwischen dem Fußabschnitt und dem Handgriffabschnitt einen geraden Verlauf haben. Der gekrümmte Verlauf bietet jedoch den Vorteil, dass das Standgestell insgesamt nicht so weit nach vorne hinausragt.

Zweckmäßigerweise besitzen die Krümmungsabschnitte jeweils einen Krümmungsradius, der sich zumindest über einen Teilbereich an den Außenradius der Trommeldeckel anschmiegt. Dadurch, dass die Verbindungsholme einen Krümmungsradius aufweisen ist es möglich, dass Unebenheiten von Boden oder Gelände ausgeglichen werden, falls die Schlauch- oder Kabeltrommel auf dem Schutzbügel liegt. Aufgrund des Krümmungsradius der Verbindungsholme ergibt sich für den Fall, dass die Trommel auf dem Schutzbügel liegt eine relativ geringe Auflagefläche, so dass sich die Schlauch- oder Kabeltrommel relativ leichtgängig in Richtung des aufzuwickelnden Schlauchs oder Kabels ausrichtet, wodurch ein schnelles und präzises Aufwickeln gewährleistet ist.

Bei einer Weiterbildung der Erfindung ist wenigstens eine Zusatzeinrichtung vorgesehen, die lösbar am Schutzbügel befestigbar oder befestigt ist. Die Zusatzeinrichtung kann beispielsweise die Form eines Werkzeugbehälters oder einer Blende haben.

In bevorzugter Weise überspannt die Zusatzeinrichtung den zwischen den beiden Verbindungsholmen befindlichen Freiraum stegartig, wobei sie einerseits an dem einen und andererseits an dem anderen Verbindungsholm lösbar befestigbar oder befestigt ist. Der Schutzbügel bietet also die Möglichkeit, an die Kabeltrommel verschiedene Zusatzeinrichtungen anzubauen, wodurch die Schlauch- oder Kabeltrommel zu einem Multifunktionsgerät wird.

Zweckmäßigerweise ist die Befestigung der Zusatzeinrichtung an dem Schutzbügel werkzeuglos möglich, beispielsweise durch Aufclipsen oder Anklemmen der Zusatzeinrichtung.

Bei einer Weiterbildung der Erfindung ist der Fußabschnitt von zwei quer, insbesondere im Wesentlichen senkrecht zur Trommelachse verlaufenden Fußholmen gebildet.

Ein bevorzugtes Ausführungsbeispiel der Erfindung ist in der Zeichnung dargestellt und wird im Folgenden näher erläutert. In der Zeichnung zeigen:
- Figur 1: eine perspektivische Ansicht des bevorzugten Aus- führungsbeispiels der erfindungsgemäßen tragbaren Schlauch- oder Kabeltrommel von schräg vorne,
- Figur 2: eine perspektivische Ansicht auf die Schlauch- oder Kabeltrommel von Figur 1 von schräg hinten,
- Figur 3: eine Seitenansicht auf die Schlauch- oder Kabel- trommel von Figur 1 gemäß dem Pfeil III aus Figur 1,
- Figur 4: eine Seitenansicht auf die Schlauch oder Kabeltrom- mel gemäß dem Pfeil IV von Figur 1,
- Figur 5: eine Draufsicht auf die Kabeltrommel von Figur 1 und
- Figur 6: eine Vorderansicht auf die Kabeltrommel von Figur 1.

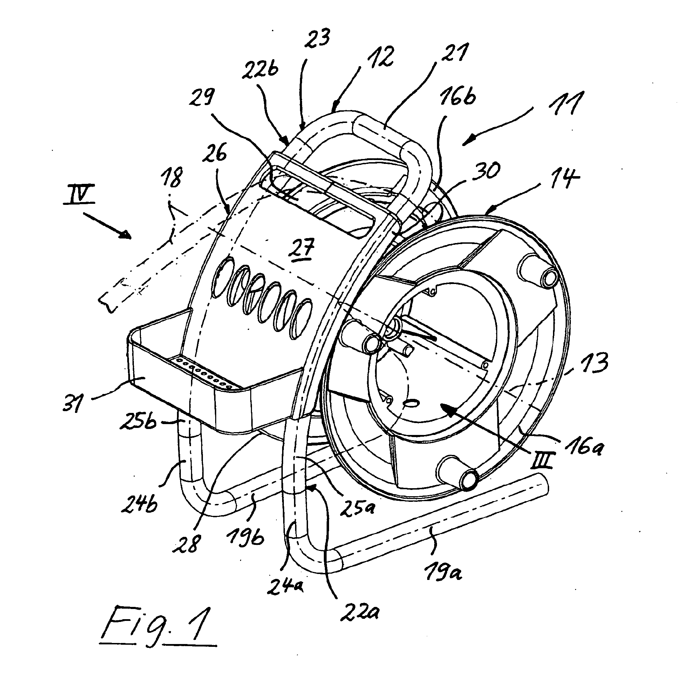

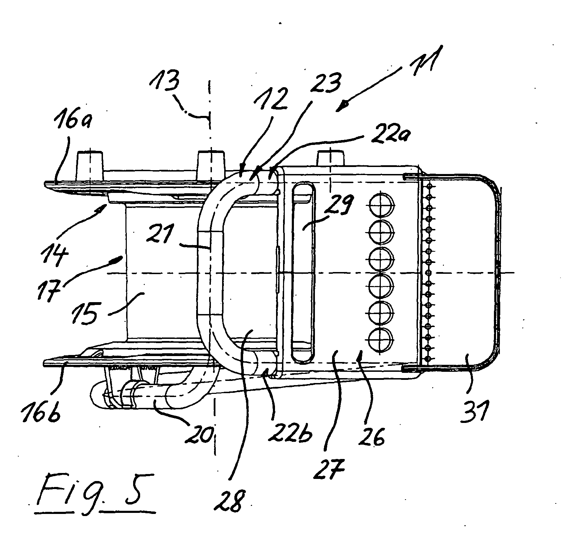

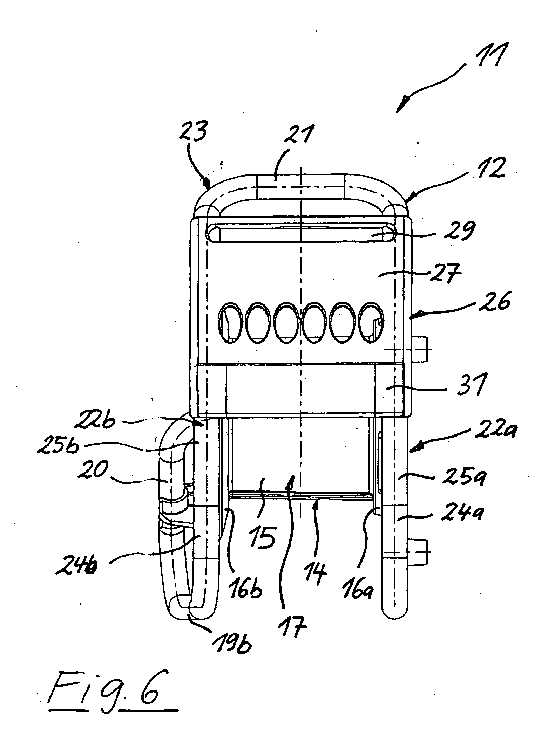

Die Figuren 1 bis 6 zeigen ein bevorzugtes Ausführungsbeispiel der erfindungsgemäßen tragbaren Schlauch- oder Kabeltrommel 11. Diese besitzt ein an einem Standgestell 12 um eine Trommelachse 13 drehbar gelagerten Trommelkörper 14, der seinerseits aus einer den Schlauch, das Kabel 18 oder dergleichen aufnehmenden Wickelwelle 15 und die Wickelwelle 15 zu beiden Enden abschließende Trommeldeckel 16a, 16b mit gegenüber der Wickelwelle 15 deutlich größerem Durchmesser besteht. Der Trommelkörper 14 kann aus Gummi-, Kunststoff- oder Metall, insbesondere Stahlmaterial bestehen.

Die einander gegenüberliegenden Innenseiten der beiden Trommeldeckel 16a, 16b begrenzen einen Wickelraum 17 zum Aufwikkeln des Schlauchs, des Kabels 18 oder dergleichen. Der Einfachheit halber wird im Folgenden die Schlauch- oder Kabeltrommel lediglich Kabeltrommel 11 genannt.

Das Standgestell 12 besteht aus einem Rohr, das auf entsprechende Länge abgelängt wird und dann in mehreren in Biegevorrichtungen durchgeführten Biegevorgängen zur charakteristischen nachfolgend näher beschriebenen Standgestellform gebogen wird. Das Standgestell 12 besteht aus einem Fußabschnitt 19 in Form von zwei im Wesentlichen parallel zueinander und senkrecht zur Trommelachse 13 ausgerichteten oder schräg zueinander, insbesondere nach hinten auseinander laufenden Fußholme 19a, 19b. Die Fußholme 19a, 19b erstrecken sich in der Standlage der Kabeltrommel 11 unterhalb der Trommeldeckel 16a, 16b und sind in Axialrichtung mit dem einen Fußholm 19a dem zugeordneten einen Trommeldeckel 16a und mit dem anderen Fußholm 19b dem zugeordneten anderen Trommeldeckel 16b vorgelagert. Die Fußholme 19a, 19b besitzen also gegenüber den Außenseiten der Trommeldeckel 16a, 16b einen seitlichen Überstand.

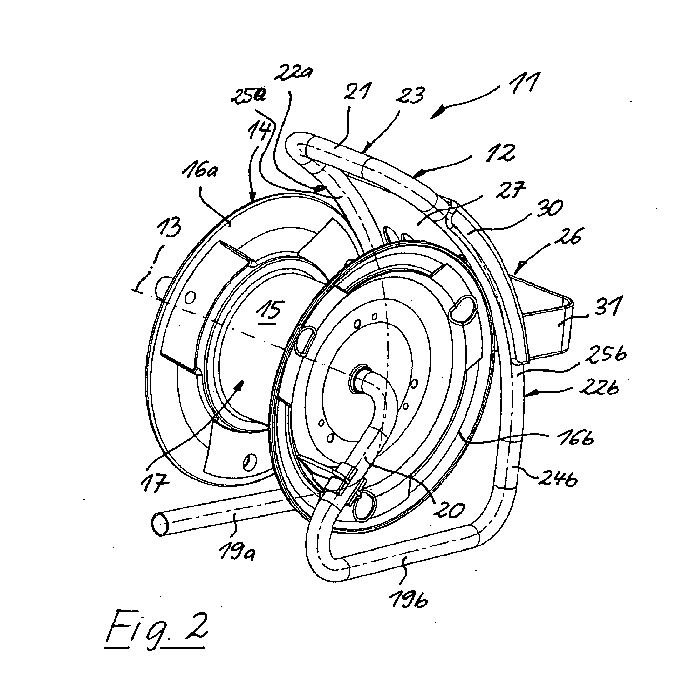

Wie insbesondere in Figur 2 dargestellt, ist der hintere Fußholm 19b über einen Biegeradius mit einem Übergangsholm 20 verbunden, der schräg nach vorne oben in Richtung der Trommelachse 13 verläuft und dort über einen weiteren Biegeradius in die holmartige Trommelachse 13 übergeht.

An den Fußabschnitt des Standgestells 12 ist ein Verbindungsabschnitt angesetzt, der mit einem oberhalb der Trommeldeckel 16a, 16b im Wesentlichen parallel zur Trommelachse 13 verlaufenden Handgriffabschnitt 21 verbunden ist. Auf den Handgriffabschnitt 21 ist gegebenenfalls ein vorzugsweise aus Kunststoff bestehendes Handgriffstück (nicht dargestellt) aufclipsbar. Der Verbindungsabschnitt wird von zwei Verbindungsholmen 22a, 22b gebildet, die jeweils über einen Biegeradius an einen der zugeordneten Fußholme 19a, 19b angesetzt sind und von dort ausgehend nach oben in Richtung Trommelachse 13 verlaufen und in den Handgriffabschnitt 21 münden. Der Abstand der beiden Verbindungsholme 22a, 22b zueinander entspricht mindestens dem Abstand der beiden Außenflächen der Trommeldeckel 16a, 16. Die beiden Verbindungsholme 22a, 22b bilden gemeinsam einen vor den Außenumfang ragenden Schutzbügel 23, der in Seitenansicht der Kabeltrommel 11 gesehen der Außenkontur der Trommeldeckel 16a, 16b vorgelagert ist. Die beiden Verbindungsholme 22a, 22b verlaufen parallel zueinander.

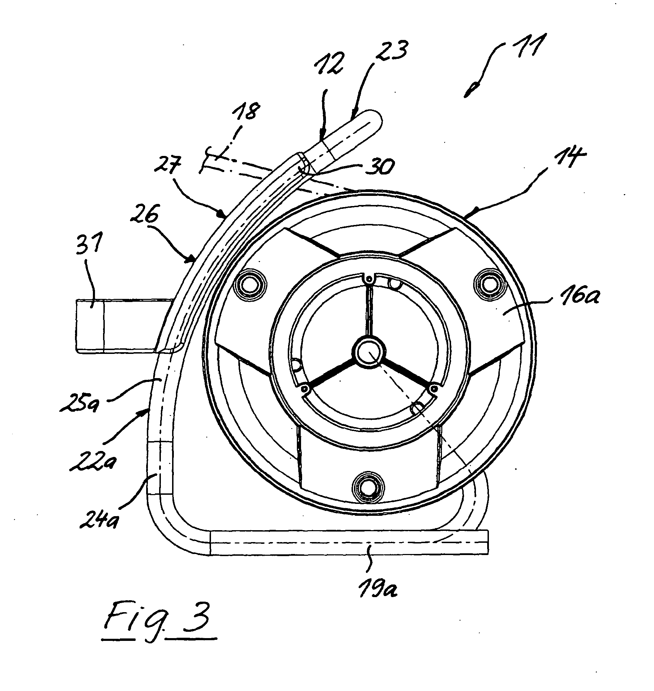

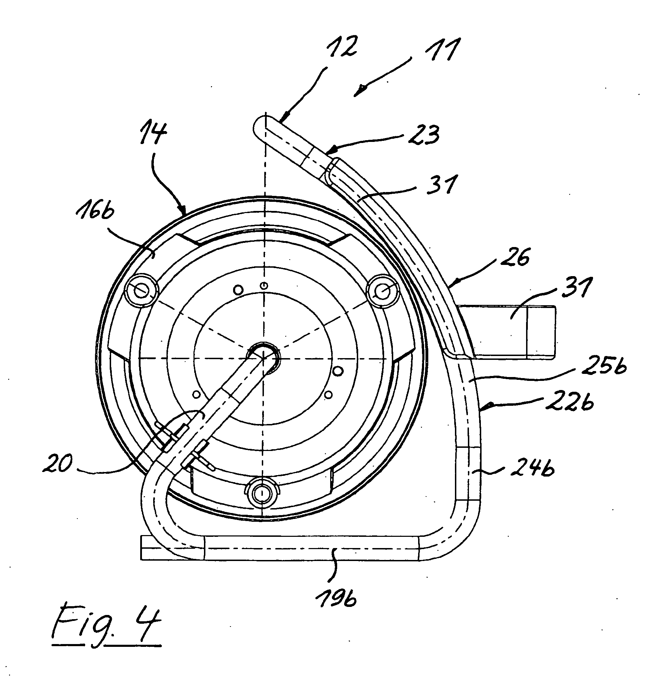

Gemäß dem bevorzugten Ausführungsbeispiel besitzen die Verbindungsholme 22a, 22b jeweils einen Vertikalabschnitt 24a, 24b, der einerseits über den Biegeradius mit dem zugeordneten Fußholm 19a, 19b verbunden ist und nach relativ kurzem geraden Verlauf in einen Krümmungsabschnitt 25a, 25b übergeht. Wie insbesondere in Figur 3 oder 4 dargestellt, ist der Krümmungsradius der jeweiligen Krümmungsabschnitte 25a, 25b wesentlich größer als der Außenradium der Trommeldeckel 16a, 16b. Dennoch beschreibt der Krümmungsabschnitt 25a, 25b zwischen der Anbindung an den Vertikalabschnitt 24a, 24b und dem Übergang an den Handgriffabschnitt 21 einen Verlauf, bei dem er sich über einen kurzen Teilbereich an den Außenradius bzw. die Außenkontur des jeweils zugeordneten Trommeldeckels 16a, 16b anschmiegt.

Durch den der Kabeltrommel 11 vorgelagerten Schutzbügel 23 wird die Kabeltrommel 11 im vorderen Bereich geschützt, so dass der Trommelkörper 14 vor Beschädigungen gesichert ist, falls die Kabeltrommel 11 nach vorne umfällt oder nicht auf den Fußholmen 19a, 19b abgestellt wird. Ferner werden Schläge und Stöße abgefangen, die von vorne auf die Kabeltrommel 11 wirken. Schließlich besteht ein seitlicher Kippschutz durch die Verbindungsholm 22a, 22b zusammen mit den jeweils zugeordneten Fußholmen 19a, 19b, da sowohl die Fußholme 19a, 19b als auch die Verbindungsholme 22a, 22b in Axialrichtung den Trommeldeckeln 16a, 16b mit ihrem jeweils voneinander weggewandten Außenflächen über die Außenflächen der Trommeldeckel 16a, 16b vorstehen.

Der Schutzbügel 23 lässt sich alternativ zu den Fußholmen 19a, 19b auch als Standabschnitt verwenden, wodurch sich Unebenheiten des Bodens oder des Geländes ausgleichen lassen. Liegt die Kabeltrommel 11 auf dem Schutzbügel 23, so ergibt sich eine relativ kleine Auflagefläche, wodurch sich die Kabeltrommel 11 beim Auf- oder Abwickeln nach dem Kabel 18 ausrichten kann.

Die lichte Weite zwischen den Verbindungsholmen 22a, 22b entspricht im Wesentlichen der Breite des Wickelraums 17. Dadurch wird eine seitliche Kabelführung für das Kabel 18 beim Aufwickeln geschaffen, wodurch verhindert wird, dass das Kabel seitlich über den Rand der Trommeldeckel 16a, 16b gelangt und möglicherweise zwischen Gestell und Trommeldeckel eingeklemmt wird. Die Anpassung der lichten Weite zwischen den Verbindungsholmen 22a, 22b an die Breite des Wickelraums 17 ergibt also auch zusätzlich noch einen Kabeleinklemmschutz.

Gemäß bevorzugtem Ausführungsbeispiel ist der Kabeltrommel 11 eine zusatzeinrichtung zugeordnet, die hier beispielhaft in Form eines Werkzeugbehälters 26 bzw. werkzeugbox dargestellt ist. Der Werkzeugbehälter 26 besitzt einen Blendenabschnitt 27, der plattenartig ausgestaltet ist und den zwischen den beiden Verbindungsholmen 22a, 22b befindlichen Freiraum 28 stegartig überspannt. Im oberen Bereich des Blendenabschnitts 27 befindet sich ein in Axialrichtung verlaufender Schlitz 29, dessen Schlitzbreite sich im Wesentlichen über die gesamte lichte Weite zwischen den beiden Verbindungsräumen 22a, 22b erstreckt und dessen Schlitzhöhe größer ist als der Durchmesser eines aufzuwickelnden Kabels 18 bzw. Schlauchs, allerdings kleiner ist, als ein am Kabel 18 angeordneter Kabelstecker bzw. am Schlauch angeordnetes Schlauchanschlussstück. Durch den Schlitz 29, der auch als Führungsschlitz bezeichnet werden kann, wird wiederum eine seitliche Kabelführung erzielt. Ferner verhindert die Schlitzhöhe, dass der Kabelstecker bzw. das Schlauchanschlussstück auf die Kabeltrommel mit aufgewickelt wird und beispielsweise durch Weiterdrehen der Kabeltrommel unsanft auf den Boden aufschlägt, was zu Beschädigung des Steckers bzw. Anschlussstücks führen kann.

Die Befestigung des Werkzeugbehälters 26 erfolgt durch werkzeugloses Aufclipsen auf den Schutzbügel 23, wobei der Blendenabschnitt 27 hierzu zwei quer zur Grundfläche des Blendenabschnitts 27 abragende Leisten 30 besitzt, die elastisch verformbar sind und die beiden Verbindungsholme 22a, 22b links und rechts umgreifen.

Der Werkzeugbehälter 26 besitzt ferner ein quer von dem Blendenabschnitt 27 nach vorne abragendes Ablagefach 31, in das Werkzeuge oder andere Gegenstände abgelegt werden können.

Es ist selbstverständlich auch möglich, ganz andersartig ausgebildete Zusatzeinrichtungen am Schutzbügel 23 anzubringen.

## Patentansprüche

1. Tragbare Schlauch- oder Kabeltrommel, mit einem an einem Standgestell (12) um eine Trommelachse (13) drehbar gelagerten Trommelkörper (14), der aus einer den Schlauch oder das Kabel (18) aufnehmenden Wickelwelle (15) und die Wickelwelle (15) zu beiden Enden abschließende Trommeldeckel (16a, 16b) mit gegenüber der Wickelwelle (15) deutlich größerem Durchmesser aufgebaut ist, wobei das Standgestell (12) einen in Standlage der Trommel (11) unterhalb der Trommeldeckel (16a, 16b) angeordneten Fußabschnitt aufweist, auf den die Trommel (11) standsicher auf dem Untergrund abstellbar ist, der über einen Verbindungsabschnitt mit einem oberhalb der Trommeldeckel (16a, 16b) im Wesentlichen parallel zur Trommelachse (13) verlaufenden Handgriffabschnitt (21) verbunden ist, wobei der Verbindungsabschnitt von zwei jeweils einem der Trommeldeckel (16a, 16b) zugeordneten Verbindungsholmen (22a, 22b) gebildet ist, die sich jeweils vom Fußabschnitt ausgehend nach oben in Richtung Trommelachse (13) erstrecken und in den Handgriffabschnitt (21) münden, wobei die beiden Verbindungsholme (22a, 22b) gemeinsam einen vor den Außenumfang der Trommeldeckel (16a, 16b) ragenden Schutzbügel (23) bilden, der in Seitenansicht der Trommel (11) gesehen der Außenkontur der Trommeldeckel (16a, 16b) vorgelagert ist, **dadurch gekennzeichnet, dass** das Standgestell (12) aus einem einzigen Rohr, das auf entsprechende Länge abgelängt und dann in mehreren in Biegevorrichtungen durchgeführten Biegevorgängen zu einer Standgestellform gebogen ist, besteht.

2. Trommel nach Anspruch 1, **dadurch gekennzeichnet, dass** die Verbindungsholme (22a, 22b) im Wesentlichen parallel zueinander ausgerichtet sind.

3. Trommel nach Anspruch 1 oder 2, **dadurch gekennzeichnet, dass** die Verbindungsholme (22a, 22b) in Axialrichtung bezüglich der Trommelachse (13) über die Außenflächen der zugeordneten Trommeldeckel (16a, 16b) hinausstehen.

4. Trommel nach einem der vorhergehenden Ansprüche, **dadurch gekennzeichnet, dass** die lichte Weite zwischen den beiden Verbindungsholmen (22a, 22b) im Wesentlichen der Breite eines durch einander gegenüberliegende Innenseiten der Trommeldeckel (16a, 16b) gebildeten Wickelraums (17) entspricht.

5. Trommel nach einem der vorhergehenden Ansprüche, **dadurch gekennzeichnet, dass** die Verbindungsholme (22a, 22b) jeweils einen zwischen Fußabschnitt und Handgriffabschnitt (21) konvex gekrümmten Krümmungsabschnitt (25a, 25b) besitzen.

6. Kabeltrommel nach Anspruch 5, **dadurch gekennzeichnet, dass** die Krümmungsabschnitte (25a, 25b) jeweils einen Krümmungsradius aufweisen, der sich zumindest über einen Teilbereich in den Außenradius der Trommeldeckel (16a, 16b) anschmiegt.

7. Trommel nach einem der vorhergehenden Ansprüche, **dadurch gekennzeichnet, dass** wenigstens eine Zusatzeinrichtung, beispielsweise in Form eines Werkzeugbehälters (26), einer Blende oder dergleichen, vorgesehen ist, die lösbar am Schutzbügel (23) befestigbar oder befestigt ist.

8. Trommel nach Anspruch 7, **dadurch gekennzeichnet, dass** die Zusatzeinrichtung den zwischen den beiden Verbindungsholmen (22a, 22b) befindlichen Freiraum stegartig überspannt und einerseits an dem einen und andererseits an dem anderen Verbindungsholm (22a, 22b) lösbar befestigbar oder befestigt ist.

9. Trommel nach Anspruch 7 oder 8, **dadurch gekennzeichnet, dass** die Befestigung der zusatzeinrichtung werkzeuglos möglich ist.

10. Trommel nach einem der vorhergehenden Ansprüche, **dadurch gekennzeichnet, dass** der Fußabschnitt von zwei quer, insbesondere im Wesentlichen senkrecht zur Trommelachse (13) verlaufenden Fußholmen (19a, 19b) gebildet ist.

## Claims

1. Portable hose or cable reel, with a reel body (14) mounted on a stand (12), rotatable around a reel axle (13) and constructed of a winding shaft (15) holding the hose or cable (18) and reel covers (16a, 16b) terminating the winding shaft (15) at both ends and with much greater diameter than the winding shaft (15), wherein the stand (12) has a foot section located below the reel covers (16a, 16b) in the standing position of the reel (11), on which the reel (11) may be stood stably on the ground, and which is joined via a connecting section to a handle section (21) running above the reel covers (16a, 16b) substantially parallel to the reel axle (13), wherein the connecting section is formed by two connecting bars (22a, 22b), each assigned to one of the reel covers (16a, 16b) and each extending upwards from the foot section towards the reel axle (13) and leading into the handle section (21), wherein the two connecting bars (22a, 22b) together form a guard (23) extending in front of the outer periphery of the reel covers (16a, 16b) and, in a side view of the reel (11), mounted in front of the external contour of the reel covers (16a, 16b), **characterised in that** the stand (12) is made of a single tube, cut to the appropriate length and then bent into stand form in several bending operations performed in bending fixtures.

2. Reel according to claim 1, **characterised in that** the connecting bars (22a, 22b) are aligned substantially parallel to one another.

3. Reel according to claim 1 or 2, **characterised in that** the connecting bars (22a, 22b) extend outwards over the outer surfaces of the assigned reel covers (16a, 16b), in the axial direction relative to the reel axle (13).

4. Reel according to any of the preceding claims, **characterised in that** the clear width between the two connecting bars (22a, 22b) corresponds substantially to the width of a winding space (17) formed by opposite inner sides of the reel covers (16a, 16b).

5. Reel according to any of the preceding claims, **characterised in that** the connecting bars (22a, 22b) each have a convex curved section (25a, 25b) between the foot section and the handle section (21).

6. Cable reel according to claim 5, **characterised in that** the curved sections (25a, 25b) each have a radius of curvature which clings to the outer radius of the reel covers (16a, 16b), at least over a portion of it.

7. Reel according to any of the preceding claims, **characterised in that** at least one additional device, for example in the form of a tool container (26), a cover or the like is provided and may be or is releasably attached to the guard (23).

8. Reel according to claim 7, **characterised in that** the additional device spans the free space between the two connecting bars (22a, 22b) in a bridge-like manner and may be or is releasably fastened at one end to the one and at the other end to the other connecting bar (22a, 22b).

9. Reel according to claim 7 or 8, **characterised in that** the attachment of the additional device may be effected without tools.

10. Reel according to any of the preceding claims, **characterised in that** the foot section is formed by two transverse foot rails (19a, 19b), in particular running substantially at right-angles to the reel axle (13).

## Revendications

1. Dévidoir portatif de tuyau ou câble, comprenant un corps de dévidoir (14) logé de manière rotative autour d'un axe de dévidoir (13) sur un support (12), qui est constitué d'un arbre d'enroulement (15) recevant le tuyau ou le câble (18) et d'un couvercle de dévidoir (16a, 16b) terminant l'arbre d'enroulement (15) à chaque extrémité avec un diamètre nettement plus grand que celui de l'arbre d'enroulement (15), le support (12) présentant une section de pied disposée en position fixe du dévidoir (11) au-dessous des couvercles de dévidoir (16a, 16b), sur laquelle le dévidoir (11) peut être déposé de manière stable sur le sol, qui est reliée par une section de liaison à une section de poignée (21) s'étendant essentiellement parallèlement à l'axe de dévidoir (13) au-dessus des couvercles de dévidoir (16a, 16b), la section de liaison étant formée de deux longerons de liaison (22a, 22b) associés respectivement à l'un des couvercles de dévidoir (16a, 16b), qui s'étendent respectivement en partant de la section de pied vers le haut en direction de l'axe de dévidoir (13) et débouchent dans la section de poignée (21), les deux longerons de liaison (22a, 22b) formant ensemble un arceau de protection (23) dépassant de la périphérie extérieure des couvercles de dévidoir (16a, 16b), qui est logé en amont du contour extérieur des couvercles de dévidoir (16a, 16b) vu dans la vue de côté du dévidoir (11), **caractérisé en ce que** le support (12) se compose d'un seul tube qui est coupé à la longueur correspondante puis est plié en une forme de support dans plusieurs processus de flexion réalisés dans des appareils à plier.

2. Dévidoir selon la revendication 1, **caractérisé en ce que** les longerons de liaison (22a, 22b) sont orientés sensiblement parallèlement l'un à l'autre.

3. Dévidoir selon la revendication 1 ou 2, **caractérisé en ce que** les longerons de liaison (22a, 22b) se trouvent dans le sens axial par rapport à l'axe de dévidoir (13) au-delà des surfaces extérieures des couvercles de tambour (16a, 16b) associés.

4. Dévidoir selon l'une quelconque des revendications précédentes, **caractérisé en ce que** le diamètre intérieur entre les deux longerons de liaison (22a, 22b) correspond sensiblement à la largeur d'un espace d'enroulement (17) formé par des côtés intérieurs opposés des couvercles de tambour (16a, 16b).

5. Dévidoir selon l'une quelconque des revendications précédentes, **caractérisé en ce que** les longerons de liaison (22a, 22b) possèdent chacun une section de courbure (25a, 25b) courbée de manière convexe entre la section de pied et la section de poignée (21).

6. Dévidoir selon la revendication 5, **caractérisé en ce que** les sections de courbure (25a, 25b) présentent chacune un rayon de courbure qui s'adapte au moins sur une zone partielle au rayon extérieur des couvercles de dévidoir (16a, 16b).

7. Dévidoir selon l'une quelconque des revendications précédentes, **caractérisé en ce qu'**au moins un dispositif supplémentaire par exemple sous la forme d'un récipient d'outil (26), d'un cadre ou similaire est prévu, lequel est ou peut être fixé de manière amovible sur l'arceau de protection (23).

8. Dévidoir selon la revendication 7, **caractérisé en ce que** le dispositif supplémentaire recouvre comme une traverse l'espace libre se trouvant entre les deux longerons de liaison (22a, 22b) et est ou peut être fixé de manière détachable d'une part sur un longeron de liaison (22a, 22b) et d'autre part sur l'autre longeron de liaison (22a, 22b).

9. Dévidoir selon la revendication 7 ou 8, **caractérisé en ce que** la fixation du dispositif supplémentaire est possible sans outil.

10. Dévidoir selon l'une quelconque des revendications précédentes, **caractérisé en ce que** la section de pied est formée par deux longerons de pied (19a, 19b) s'étendant transversalement, en particulier sensiblement perpendiculairement à l'axe de dévidoir (13).
